# EUROPEAN PATENT APPLICATION

(11) **EP 4 461 775 A1**
(43) Date of publication of application: **13.11.2024**
(21) Application number: 24175202.1
(22) Date of filing: 10.05.2024
(51) Int. Cl.: C09D 11/322, C09D 11/38

(54) **INKJET INK**

(30) Priority: 11.05.2023 JP 2023078881
(71) Applicant: Kishu Giken Kogyo Co., Ltd., Wakayama-shi, Wakayama, 641-0015 (JP)
(72) Inventor: NAKAGAWA, Yuya, Wakayama, 6410015 (JP); SAKAGAMI, Tomohiro, Wakayama, 6410015 (JP)
(74) Representative: Meissner Bolte Partnerschaft mbB

(57) **Abstract**

Provided is an inkjet ink that has low viscosity and a low freezing point, enables suppression of swelling of rubber members, and has excellent ejection stability without using mineral oils, such as MOAH and MOSH.

The ink comprises
a saturated fatty acid monoester having a flash point of 125 to 170°C and a viscosity at 20°C of 4.0 to 10.0 mPa.s (1),
a saturated fatty acid monoester having a flash point of 170 to 200°C (2), and
a plasticizer comprising two or more saturated fatty acid diesters each having a flash point of 125 to 220°C, or a saturated fatty acid diester having a flash point of 125 to 220°C and a saturated fatty acid monoester having a flash point of 125 to 170°C and a viscosity at 20°C of 0.1 to 4.0 mPa.s (3), and
the total content of the saturated fatty acid monoester (1) and the saturated fatty acid monoester (2) being 53.0 to 63.0 mass% based on the total amount of the ink taken as 100 mass%.

## Description

### Technical Field

The present invention relates to an inkjet ink.

### Background Art

An inkjet recording system is a printing system in which a highly fluid liquid ink is ejected from a fine nozzle and adhered to a recording medium, such as paper, for printing. Inkjet recording systems enable printing of high-resolution and high-quality images at high speed and with low noise by using a relatively inexpensive device, and have rapidly become widespread.

In particular, in piezo inkjet methods, a piezoelectric element, whose volume changes when voltage is applied, is used, and an ink is ejected from the inkjet head by vibration in response to the volume change of the piezoelectric element. Piezo inkjet methods allow for precise control of the amount of ejected ink by voltage control, are less affected by the use environment because they do not require heating, and achieve high durability.

However, oil-based inkjet inks (piezo inkjet inks) used in piezo inkjet methods are required to meet various requirements. First, oil-based inkjet inks are required to be less likely to volatilize in order to suppress loss of ejection stability due to volatilization. In addition, to suppress clogging in inkjet heads, oil-based inkjet inks (piezo inkjet inks) used in piezo inkjet methods are required to have low viscosity. Use of a more precise head requires lower viscosity. Specifically, such inks are required to have a viscosity at 20°C of 15.0 mPa·s or less. Next, it is necessary to suppress swelling of rubber members, such as rubber packing, that constitute an inkjet head due to an inkjet ink. Furthermore, assuming use in winter, the freezing points of inkjet inks need to be subzero temperatures in order to suppress clogging caused by freezing of inkjet inks.

To meet the various requirements described above, petroleum-based hydrocarbons, such as liquid paraffin, are often used as a solvent in inkjet inks (piezo inkjet inks) used in piezo inkjet methods.

### Summary of Invention

### Technical Problem

However, due to concern about risks to the human body, the French government has regulated the use of mineral oils and banned the use of oils and fats made from petroleum-based hydrocarbons used in the production of inks from January 1, 2023. Thus, mineral oil aromatic hydrocarbons (MOAH) containing 1 to 7 aromatic rings or mineral oil saturated hydrocarbons (MOSH) containing 16 to 35 carbon atoms can no longer be used.

There is thus a need to provide an inkjet ink that meets the various requirements described above without using mineral oils, such as MOAH and MOSH.

Therefore, an object of the present invention is to provide an inkjet ink that has low viscosity and a low freezing point, enables suppression of swelling of rubber members, and has excellent ejection stability, without using mineral oils, such as MOAH and MOSH.

### Solution to Problem

The present inventors conducted extensive research to achieve the above object, and found that an oil-based inkjet ink that has low viscosity and a low freezing point, enables suppression of swelling of rubber members, and has excellent ejection stability can be obtained without using mineral oils, such as MOAH and MOSH, by using saturated fatty acid monoesters each having a specific flash point and saturated fatty acid diester(s) having a specific flash point, and setting the content of the saturated fatty acid monoesters within a specific range. The present invention has been accomplished through further research based on the above finding. Specifically, the present invention includes the following.

### Item 1.

An inkjet ink comprising:
a saturated fatty acid monoester having a flash point of 125 to 170°C and a viscosity at 20°C of 4.0 to 10.0 mPa·s (1);
a saturated fatty acid monoester having a flash point of 170 to 200°C (2); and
a plasticizer,
the plasticizer comprising two or more saturated fatty acid diesters each having a flash point of 125 to 220°C, or a saturated fatty acid diester having a flash point of 125 to 220°C and a saturated fatty acid monoester having a flash point of 125 to 170°C and a viscosity at 20°C of 0.1 to 4.0 mPa·s (3), and
the total content of the saturated fatty acid monoester (1) and the saturated fatty acid monoester (2) being 53.0 to 63.0 mass% based on the total amount of the ink taken as 100 mass%.

### Item 2.

The inkjet ink according to Item 1, wherein the content ratio of the saturated fatty acid monoester (2) to the saturated fatty acid monoester (1) (saturated fatty acid monoester (2)/saturated fatty acid monoester (1)) is 0.20 to 0.80.

### Item 3.

The inkjet ink according to Item 1 or 2, wherein the content of the plasticizer is 15.0 to 35.0 mass% in total based on the total amount of the ink taken as 100 mass%.

### Item 4.

The inkjet ink according to any one of Items 1 to 3, further comprising a pigment and/or a dye.

### Item 5.

The inkjet ink according to any one of Items 1 to 4, further comprising a pigment derivative and/or a pigment dispersant.

### Item 6.

The inkjet ink according to any one of Items 1 to 5, which is free of mineral oils.

### Item 7.

The inkjet ink according to any one of Items 1 to 6, which is an oil-based inkjet ink.

### Item 8.

The inkjet ink according to any one of Items 1 to 7, which is a piezo inkjet ink.

### Item 9.

An inkjet ink container containing the inkjet ink of any one of Items 1 to 8.

### Item 10.

A printed material comprising a printing substrate that has been printed on with the inkjet ink of any one of Items 1 to 8.

### Item 11.

The printed material according to Item 10, wherein the printing substrate is a porous material.

### Advantageous Effects of Invention

The present invention provides an oil-based inkjet ink that has low viscosity and a low freezing point, enables suppression of swelling of rubber members, and has excellent ejection stability, without using mineral oils, such as MOAH and MOSH.

### Description of Embodiments

In the present specification, "contain" and "comprise" include all the concepts of "comprise," "consist essentially of," and "consist of."

In the present specification, the numerical range defined by A to B indicates A or more and B or less.

### 1. Inkjet Ink

The inkjet ink of the present invention comprises a saturated fatty acid monoester having a flash point of 125 to 170°C and a viscosity at 20°C of 4.0 to 10.0 mPa·s (1), a saturated fatty acid monoester having a flash point of 170 to 200°C (2), and a plasticizer, the plasticizer comprising two or more saturated fatty acid diesters each having a flash point of 125 to 220°C, or a saturated fatty acid diester having a flash point of 125 to 220°C and a saturated fatty acid monoester having a flash point of 125 to 170°C and a viscosity at 20°C of 0.1 to 4.0 mPa·s (3), and the total content of the saturated fatty acid monoester (1) and the saturated fatty acid monoester (2) being 53.0 to 63.0 mass% based on the total amount of the ink taken as 100 mass%.

### (1-1) Saturated Fatty Acid Monoester (1)

In the present invention, the inkjet ink comprises a saturated fatty acid monoester having a flash point of 125 to 170°C and a viscosity at 20°C of 4.0 to 10.0 mPa·s (1). If the saturated fatty acid monoester (1) is not contained, the resulting inkjet ink has high viscosity, and clogging in inkjet heads thus cannot be suppressed. The resulting inkjet ink also has a high freezing point, and clogging due to freezing in winter thus cannot be prevented. Rubber members also tend to swell, thereby causing the ink to leak from the inkjet device. As a result, the operation of the printer becomes unstable. Further, the resulting inkjet ink is likely to volatilize and has poor ejection stability.

The flash point of the saturated fatty acid monoester (1) is 125 to 170°C, and preferably 127 to 168°C, in terms of, for example, viscosity, freezing point, suppression of swelling of rubber members, and ejection stability. If the flash point of the saturated fatty acid monoester (1) is less than 125°C, the resulting inkjet ink is likely to volatilize, resulting in poor ejection stability, and rubber members tend to swell, thereby causing the ink to leak from the inkjet device, resulting in unstable operation of the printer. If the flash point of the saturated fatty acid monoester (1) exceeds 170°C, the resulting inkjet ink has high viscosity, and clogging in inkjet heads thus cannot be suppressed. The resulting inkjet ink also has a high freezing point, and clogging due to freezing in winter thus cannot be prevented.

The viscosity of the saturated fatty acid monoester (1) at 20°C is 4.0 to 10.0 mPa·s, and preferably 4.5 to 8.0 mPa·s, in terms of, for example, viscosity, freezing point, suppression of swelling of rubber members, and ejection stability. If the viscosity of the saturated fatty acid monoester (1) at 20°C is less than 4.0 mPa·s, the flash point decreases, and volatilization occurs at the nozzle, making stable operation impossible. If the viscosity of the saturated fatty acid monoester (1) at 20°C exceeds 10.0 mPa·s, the viscosity of the ink increases, and thus, the ink cannot be ejected stably.

The boiling point of the saturated fatty acid monoester (1) is not particularly limited, and is preferably 100 to 200°C, and more preferably 130 to 180°C, in terms of, for example, viscosity, freezing point, suppression of swelling of rubber members, and ejection stability. In terms of easily keeping the viscosity of the inkjet ink low, it is preferred that the molecular weight is low and that the boiling point is not too high. Also in terms of ease of reducing the melting point to make it easy to reduce the freezing point, it is preferred that the boiling point is not too high.

Examples of saturated fatty acid monoesters (1) that meet the above conditions include isopropyl myristate, butyl myristate, butyl laurate, and the like. These saturated fatty acid monoesters (1) may be used singly or in a combination of two or more. The saturated fatty acid monoesters (1) may be known or commercially available products.

### (1-2) Saturated Fatty Acid Monoester (2)

In the present invention, the inkjet ink comprises a saturated fatty acid monoester having a flash point of 170 to 200°C (2). If the saturated fatty acid monoester (2) is not contained, the resulting inkjet ink has high viscosity, and clogging in inkjet heads thus cannot be suppressed. The resulting inkjet ink also has a high freezing point, and clogging due to freezing in winter thus cannot be prevented. Rubber members also tend to swell, thereby causing the ink to leak from the inkjet device. As a result, the operation of the printer becomes unstable. Further, the resulting inkjet ink is likely to volatilize and has poor ejection stability.

The flash point of the saturated fatty acid monoester (2) is 170 to 200°C, and preferably 175 to 195°C, in terms of, for example, viscosity, freezing point, suppression of swelling of rubber members, and ejection stability. If the flash point of the saturated fatty acid monoester (2) is less than 170°C, rubber members tends to swell, thereby causing the ink to leak from the inkjet device, resulting in unstable operation of the printer. If the flash point of the saturated fatty acid monoester (2) exceeds 200°C, the resulting inkjet ink has high viscosity, and clogging in inkjet heads thus cannot be suppressed. The resulting inkjet ink also has a high freezing point, and clogging due to freezing in winter thus cannot be prevented. Further, the viscosity of the ink increases, which makes stable ejection impossible.

The viscosity of the saturated fatty acid monoester (2) at 20°C is not particularly limited, and is preferably 4.0 to 10.0 mPa·s, and more preferably 5.0 to 9.0 mPa·s, in terms of, for example, viscosity, freezing point, suppression of swelling of rubber members, and ejection stability.

The boiling point of the saturated fatty acid monoester (2) is not particularly limited, and is preferably 100 to 200°C, and more preferably 130 to 180°C, in terms of, for example, viscosity, freezing point, suppression of swelling of rubber members, and ejection stability. In terms of easily keeping the viscosity of the inkjet ink low, it is preferred that the molecular weight is low and that the boiling point is not too high.

Examples of saturated fatty acid monoesters (2) that meet the above conditions include isopropyl palmitate, ethyl palmitate, and the like. These saturated fatty acid monoesters (2) may be used singly or in a combination of two or more. The saturated fatty acid monoesters (2) may be known or commercially available products.

### (1-3) Plasticizer

In the present invention, the plasticizer comprises two or more saturated fatty acid diesters having a flash point of 125 to 220°C, or a saturated fatty acid diester having a flash point of 125 to 220°C and a saturated fatty acid monoester having a flash point of 125 to 170°C and a viscosity at 20°C of 0.1 to 4.0 mPa·s (3).

If only one saturated fatty acid diester having a flash point of 125 to 220°C is used and the saturated fatty acid monoester (3) is not used, the resulting inkjet ink has high viscosity, and clogging at inkjet heads thus cannot be suppressed. The resulting inkjet ink also has a high freezing point, and clogging due to freezing in winter thus cannot be prevented. Rubber members also tend to swell, thereby causing the ink to leak from the inkjet device. As a result, the operation of the printer becomes unstable. Further, the resulting inkjet ink is likely to volatilize and has poor ejection stability.

### Saturated Fatty Acid Diester

The saturated fatty acid diester(s) has/have a flash point of preferably 125 to 220°C, and more preferably 140 to 210°C, in terms of, for example, viscosity, freezing point, suppression of swelling of rubber members, and ejection stability. If the flash point of the saturated fatty acid diester(s) is less than 125°C, the resulting inkjet ink is likely to volatilize, resulting in poor ejection stability. If the flash point of the saturated fatty acid diester(s) exceeds 220°C, the resulting inkjet ink has high viscosity, and clogging in inkjet heads thus cannot be suppressed. The resulting inkjet ink also has a high freezing point, and clogging due to freezing in winter thus cannot be prevented.

The viscosity of the saturated fatty acid diester(s) at 20°C is not particularly limited, and is preferably 4.0 to 20.0 mPa·s, and more preferably 5.0 to 15.0 mPa·s, in terms of, for example, viscosity, freezing point, suppression of swelling of rubber members, and ejection stability.

Examples of saturated fatty acid diesters that meet the above conditions include dibutyl sebacate, diethylhexyl sebacate, dibutyl adipate, diethylhexyl adipate, and the like. The saturated fatty acid diesters may be used singly or in a combination of two or more. When one saturated fatty acid diester is used, dibutyl sebacate is most preferred in terms of, for example, viscosity, freezing point, suppression of swelling of rubber members, and ejection stability. When two or more saturated fatty acid diesters are used, one is preferably dibutyl sebacate, and another is preferably another saturated fatty acid diester, in terms of, for example, viscosity, freezing point, suppression of swelling of rubber members, and ejection stability. The saturated fatty acid diesters may be known or commercially available products.

### Saturated Fatty Acid Monoester (3)

The flash point of the saturated fatty acid monoester (3) is preferably 125 to 170°C, and more preferably 130 to 168°C, in terms of, for example, viscosity, freezing point, suppression of swelling of rubber members, and ejection stability.

The viscosity of the saturated fatty acid monoester (3) at 20°C is not particularly limited, and is preferably 1.0 to 5.0 mPa·s, and more preferably 2.0 to 4.0 mPa·s, in terms of, for example, viscosity, freezing point, suppression of swelling of rubber members, and ejection stability.

Examples of saturated fatty acid monoesters (3) that meet the above conditions include methyl laurate and the like. These saturated fatty acid monoesters (3) may be used singly or in a combination of two or more. The saturated fatty acid monoesters (3) may be known or commercially available products.

### (1-4) Solvent Content

As described above, the inkjet ink of the present invention comprises the saturated fatty acid monoester (1), the saturated fatty acid monoester (2), and the plasticizer. The content of each component is preferably as follows.

The content of the saturated fatty acid monoester (1) is not particularly limited, and is preferably 30.0 to 50.0 mass%, and more preferably 35.0 to 45.0 mass%, based on the total amount of the inkjet ink of the present invention taken as 100 mass%, in terms of, for example, viscosity, freezing point, suppression of swelling of rubber members, and ejection stability.

The content of the saturated fatty acid monoester (2) is not particularly limited, and is preferably 5.0 to 33.0 mass%, and more preferably 10.0 to 27.0 mass%, based on the total amount of the inkjet ink of the present invention taken as 100 mass%, in terms of, for example, viscosity, freezing point, suppression of swelling of rubber members, and ejection stability.

The total content of the saturated fatty acid monoester (1) and the saturated fatty acid monoester (2) is not particularly limited, and is preferably 53.0 to 63.0 mass%, and more preferably 55.0 to 62.0 mass%, based on the total amount of the inkjet ink of the present invention taken as 100 mass%, in terms of, for example, viscosity, freezing point, suppression of swelling of rubber members, and ejection stability.

The content ratio of the saturated fatty acid monoester (2) to the saturated fatty acid monoester (1) (saturated fatty acid monoester (2)/saturated fatty acid monoester (1)) is not particularly limited, and is preferably 0.20 to 0.80, and more preferably 0.25 to 0.70, in terms of, for example, viscosity, freezing point, suppression of swelling of rubber members, and ejection stability.

The total content of the plasticizer is not particularly limited, and is preferably 15.0 to 35.0 mass%, and more preferably 24.0 to 33.0 mass%, based on the total amount of the inkjet ink of the present invention taken as 100 mass%, in terms of, for example, viscosity, freezing point, suppression of swelling of rubber members, and ejection stability.

When dibutyl sebacate is contained as a plasticizer, the content thereof is not particularly limited, and is preferably 10.0 to 30.0 mass%, and more preferably 12.0 to 28.0 mass%, based on the total amount of the inkjet ink of the present invention taken as 100 mass%, in terms of, for example, viscosity, freezing point, suppression of swelling of rubber members, and ejection stability.

When a saturated fatty acid diester other than dibutyl sebacate and the saturated fatty acid monoester (3) are contained as plasticizers, the total content thereof is not particularly limited, and is preferably 2.0 to 25.0 mass%, and more preferably 3.0 to 20.0 mass%, based on the total amount of the inkjet ink of the present invention taken as 100 mass%, in terms of, for example, viscosity, freezing point, suppression of swelling of rubber members, and ejection stability.

In the present invention, the saturated fatty acid monoester (1) and the saturated fatty acid monoester (2) are used as solvents, and the plasticizer described above can also be a solvent. Thus, the inkjet ink of the present invention can be an oil-based inkjet ink that contains an organic solvent as a solvent.

The use of water, ketones, alcohols, etc., which are often used as solvents in water-based inkjet inks, is not completely excluded. However, as described below, a porous substrate, such as paper, is assumed to be used as a printing substrate, and water, ketones, alcohols, etc. tend to sink into such a printing substrate. It is thus preferred that the inkjet ink of the present invention does not contain water, ketones (e.g., acetone, methyl ethyl ketone, dipropyl ketone, methyl isobutyl ketone, and methyl isopropyl ketone), alcohols (e.g., methanol, ethanol, propanol, and isopropyl alcohol), etc., or that the content of water, ketones, alcohols, etc. is 1 mass% or less based on the total amount of the inkjet ink of the present invention taken as 100 mass%.

### (1-5) Pigment and/or Dye

The inkjet ink of the present invention comprises the saturated fatty acid monoester (1), the saturated fatty acid monoester (2), and the plasticizer, as described above, and may further comprise components commonly contained in inkjet inks, such as a pigment (e.g., color material pigments and fluorescent pigments) and/or a dye (e.g., color material dyes and fluorescent dyes).

### Color Material Pigment

There is no particular limitation on color material pigments as long as they are pigments that can exhibit non-fluorescent colors. Color material pigments are broadly divided into inorganic pigments and organic pigments, both of which can be used.

Examples of inorganic color material pigments that can be suitably used include carbon black, titanium oxide, calcium carbonate, iron oxide, cobalt blue, and the like.

Examples of organic color material pigments include insoluble azo pigments, such as Toluidine Red, Toluidine Maroon, Hansa Yellow, Benzidine Yellow, and Pyrazolone Red; pigments that are derivatives from vat dyes, such as alizarin, indanthrone, and Thioindigo Maroon; soluble azo pigments, such as Lithol Red, Helio Bordeaux, Pigment Scarlet, and Permanent Red 2B; phthalocyanine pigments, such as Phthalocyanine Blue and Phthalocyanine Green; quinacridone pigments, such as Quinacridone Red and Quinacridone Magenta; isoindolinone pigments, such as Isoindolinone Yellow and Isoindolinone Orange; pyranthrone pigments, such as Pyranthrone Red and Pyranthrone Orange; and other pigments, such as Flavanthrone Yellow, Acylamide Yellow, Quinophthalone Yellow, Nickel Azo Yellow, Copper Azomethine Yellow, Perinone Orange, Anthrone Orange, Dianthraquinonyl Red, and Dioxazine Violet.

The above color material pigments can be indicated by Colour Index (C.I.) numbers. Examples include C.I. Pigment Yellow 12, 13, 14, 17, 20, 24, 74, 83, 86, 93, 109, 110, 117, 125, 128, 129, 137, 139, 147, 148, 151, 153, 154, 181, 166, 168, 185, and the like; C.I. Pigment Orange 16, 36, 43, 51, 55, 59, 61, and the like; C.I. Pigment Red 9, 48, 49, 52, 53, 57, 97, 122, 123, 168, 177, 180, 192, 202, 206, 215, 216, 217, 220, 223, 224, 226, 227, 228, 238, 240, and the like; C.I. Pigment Violet 19, 23, 30, 37, 40, 50, and the like; C.I. Pigment Blue 15, 15:1, 15:3, 15:4, 15:6, 22, 60, 64, and the like; C.I. Pigment Green 7, 36, and the like; and C.I. Pigment Brown 23, 25, 26, and the like.

The above color material pigments may be used singly, or may be used in a combination of two or more in consideration of visibility, color, etc. under visible light. The color material pigments may be known or commercially available products.

Unlike color material dyes, the color material pigments described above are dispersed in inkjet inks without being dissolved.

The color material pigments can be in the form of stable dispersions by performing rapid stirring together with a dispersant by using a disperser.

### Fluorescent Pigment

Examples of fluorescent pigments include inorganic fluorescent pigments, such as aluminates (e.g., magnesium aluminometasilicate and magnesium aluminosilicate); organic fluorescent pigments, such as perylene pigments (e.g., Perylene Red and Perylene Scarlet); and other pigments, such as Quinophthalone Yellow and diketopyrrolopyrroles.

The above fluorescent pigments can be indicated by Colour Index (C.I.) numbers. Examples include C.I. Pigment Yellow 138; C.I. Pigment Orange 71, 73, and the like; C.I. Pigment Red 254, 255, 264, and the like; and C.I. Pigment Violet 29 and the like.

Unlike fluorescent dyes, the fluorescent pigments described above are dispersed in inkjet inks without being dissolved.

The fluorescent pigments can be in the form of stable dispersions by performing rapid stirring together with a dispersant by using a disperser.

### Color Material Dye

When indicated by Colour Index (C.I.) numbers, examples of color material dyes include the following: C.I. Solvent Yellow 2, 14, 16, 19, 21, 34, 48, 56, 79, 88, 89, 93, 95, 98, 133, 137, 147, and the like; C.I. Solvent Orange 5, 6, 45, 60, 63, and the like; C.I. Solvent Red 1, 3, 7, 8, 9, 18, 23, 24, 27, 49, 83, 100, 111, 122, 125, 130, 132, 135, 195, 202, 212, and the like; C.I. Solvent Blue 2, 3, 4, 5, 7, 18, 25, 26, 35, 36, 37, 38, 43, 44, 45, 47, 48, 51, 58, 59, 59:1, 63, 64, 67, 68, 69, 70, 78, 79, 83, 94, 97, 98, 99, 100, 101, 102, 104, 105, 111, 112, 122, 124, 128, 129, 132, 136, 137, 138, 139, 143, and the like; C.I. Solvent Green 5, 7, 14, 15, 20, 35, 66, 122, 125, 131, and the like; C.I. Solvent Black 1, 3, 6, 22, 27, 28, 29, and the like; C.I. Solvent Violet 13 and the like; and C.I. Solvent Brown 1, 53, and the like. It is also possible to use basic oil-based dyes. Examples of basic oil-based dyes include C.I. Basic Violet 3; C.I. Basic Red 1, 8, and the like; and C.I. Basic Black 2 and the like.

Unlike color material pigments, the color material dyes described above are dissolved in inkjet inks.

These color material dyes may be used singly or in a combination of two or more. The color material dyes may be known or commercially available products.

### Fluorescent Dye

As fluorescent dyes, various fluorescent dyes that are dissolved in a solvent and are not visible or are less visible under visible light, but emit fluorescence and become visible when irradiated with ultraviolet light from a black light or the like can be used.

Examples of fluorescent dyes include benzoxazole derivatives, such as 2,5-bis(5-tert-butyl-2-benzoxazolyl)thiophene and 1,4-bis(2-benzoxazolyl)naphthalene; stilbene derivatives, such as 4,4'-bis(triazin-2-ylamino)stilbene-2,2'-disulfonic acid derivatives, in which a triazinyl group is substituted with a substituent (e.g., anilino, sulfanilic acid, metanilic acid, methylamino, N-methyl-N-hydroxyethylamino, bis(hydroxyethylamino), morpholino, or diethylamino); mono(azol-2-yl)stilbene derivatives, such as 2-(stilben-4-yl)naphthotriazole and 2-(4-phenylstilben-4-yl)benzoxazole; bis(azol-2-yl)stilbene derivatives, such as 4,4'-bis(triazol-2-yl)stilbene-2,2'-disulfonic acid; styryl derivatives of benzene or biphenyl, such as 1,4-bis(styryl)benzene and 4,4'-bis(styryl)biphenyl; pyrazoline derivatives, such as 1,3-diphenyl-2-pyrazoline; bis(benzazol-2-yl) derivatives having alkyl, COO-alkyl, or SO₂-alkyl as a phenyl ring substituent; bis(benzoxazol-2-yl) derivatives; bis(benzimidazol-2-yl) derivatives, such as 2-(benzofuran-2-yl)benzimidazole; coumarin derivatives, such as 7-hydroxycoumarin, 7-(amino-substituted) coumarin, 7-diethylamino-4-methylcoumarin, esculetin, β-methylumbelliferone, 3-phenyl-7-(triazin-2-yl-amino)coumarin, 3-phenyl-7-aminocoumarin, 3-phenyl-7-(azol-2-yl)coumarin, 3,7-bis(azolyl)coumarin, and 3-(2-benzothiazolyl)-7-(diethylamino) coumarin (coumarin 6); carbostyrils; naphthalimides; alkoxynaphthalimides; derivatives of dibenzothiophene-5,5'-dioxide; pyrene derivatives; pyridotriazoles; and the like. Examples of these fluorescent dyes include Nikkabright, Nikkafluor, and the like produced by Nippon Chemical Works Co., Ltd.; Kayaphor, Kayalight, and the like produced by Nippon Kayaku Co., Ltd.; Illuminarl produced by Showa Kako Corporation; Whitex produced by Sumitomo Chemical Company, Limited; Tinopal produced by BASF; and the like.

The fluorescent dyes described above may be used singly, or may be used in a combination of two or more in consideration of visibility under ultraviolet light, intensity of fluorescence, color, etc. The fluorescent dyes may be known or commercially available products.

Unlike fluorescent pigments, the fluorescent dyes described above are dissolved in inkjet inks.

The content of the pigment and/or dye in the inkjet ink of the present invention is not particularly limited, and is preferably 3.0 to 20.0 mass%, and more preferably 5.0 to 15.0 mass%, based on the total amount of the inkjet ink of the present invention taken as 100 mass%, in terms of, for example, viscosity, freezing point, suppression of swelling of rubber members, and ejection stability. When two or more pigments and/or dyes are used, it is preferable to adjust the total content thereof to be within the above range.

### (1-6) Pigment Derivative and Pigment Dispersant

In particular, when a pigment is used, the inkjet ink of the present invention may comprise a pigment derivative and/or a pigment dispersant for the purpose of dispersing the pigment.

Specific examples of pigment derivatives include Solsperse 5000S (produced by Lubrizol Corporation) and the like.

Specific examples of pigment dispersants include hydroxyl group-containing carboxylic acid esters, salts of long-chain polyaminoamides and high-molecular-weight acid esters, salts of high-molecular-weight polycarboxylic acids, salts of long-chain polyaminoamides and polar acid esters, macromolecular copolymers, modified polyurethanes, modified poly(meth)acrylates, polyether ester anionic activators, naphthalene sulfonic acid formalin condensate salts, aromatic sulfonic acid formalin condensate salts, polyoxyethylene alkyl phosphoric acid esters, polyoxyethylene nonylphenyl ethers, polyester polyamines, stearylamine acetate, and the like.

Specific examples of pigment dispersants having an ester structure or a modified poly(meth)acrylate structure include Solsperse 9000, Solsperse 13940, Solsperse 17000, Solsperse 18000, Solsperse 24000, Solsperse 28000, Solsperse 32000, Solsperse J-180, and Solsperse J-200 (all of which are produced by Lubrizol Corporation); DA-703-50, DA-7300, and DA234 (all of which are produced by Kusumoto Chemicals, Ltd.); DISPERBYK-2022, DISPERBYK-2025, DISPERBYK-2050, DISPERBYK-2096, BYKJET-9150, BYKJET-9051, and BYKJET-9052 (all of which are produced by BYK-Chemie); and the like.

These pigment derivatives and pigment dispersants may be used singly or in a combination of two or more. The pigment derivatives and pigment dispersants may be known or commercially available products.

When the inkjet ink of the present invention comprises a pigment derivative and a pigment dispersant, the content of the pigment derivative and pigment dispersant is not particularly limited, and is preferably 1.5 to 10.0 mass%, and more preferably 2.5 to 7.5 mass%, based on the total amount of the inkjet ink of the present invention taken as 100 mass%, in terms of, for example, viscosity, freezing point, suppression of swelling of rubber members, and ejection stability. When two or more pigment derivatives and pigment dispersants are used, it is preferable to adjust the total content thereof to be within the above range.

### (1-7) Other Additives

The inkjet ink of the present invention may comprise various components for various purposes in addition to the components described above as long as the effects of the present invention are not impaired. For example, components commonly used in inkjet inks, such as conductive agents, surface adjusting agents, surfactants, and stabilizers, may be contained within the range of the content usually used. The inkjet ink of the present invention does not completely exclude the incorporation of unsaturated fatty acid esters within the range of the content usually used.

However, the inkjet ink of the present invention can be an oil-based inkjet ink that has low viscosity and a low freezing point, enables suppression of swelling of rubber members, and has excellent ejection stability, without using mineral oils. In addition, from the viewpoint of the French government's regulations for mineral oils, it is preferred that the inkjet ink of the present invention contains no mineral oils such as mineral oil aromatic hydrocarbons (MOAH) having 1 to 7 aromatic rings and mineral oil saturated hydrocarbons (MOSH) having 16 to 35 carbon atoms. Moreover, unsaturated fatty acid esters easily deteriorate due to oxidation of unsaturated bond moieties, which reduces stability over time. It is thus preferred that the inkjet ink of the present invention contains no unsaturated fatty acid esters.

### (1-8) Inkjet Ink

The method for producing the inkjet ink comprising the components described above is not particularly limited. For example, the components can be added simultaneously or sequentially in a predetermined order.

The thus-obtained inkjet ink of the present invention can be an oil-based inkjet ink that has low viscosity and a low freezing point, enables suppression of swelling of rubber members, and has excellent ejection stability. Thus, the inkjet ink of the present invention is preferably an inkjet ink (piezo inkjet ink, in particular, drop-on-demand piezo inkjet ink) for use in piezo inkjet methods, in particular, drop-on-demand piezo inkjet methods.

The inkjet ink of the present invention described above can be contained in a container to prepare an inkjet ink container to be used for storage, transportation, etc. of the inkjet ink before the inkjet ink is used in an inkjet recording device, and can be supplied to the recording device when the inkjet ink is used.

The shape of the inkjet ink container is not particularly limited, and may be any shape, such as a pack, a bottle, a tank, a jar, or a can.

The inkjet ink of the present invention can be applied to printing on various printing substrates.

Examples of printing substrates include, but are not limited to, paper, metal, glass, plastic, and coated materials obtained by coating the surfaces of these materials. Since the inkjet ink of the present invention is preferably an inkjet ink (piezo inkjet ink, in particular, drop-on-demand piezo inkjet ink) for use in piezo inkjet methods, in particular, drop-on-demand piezo inkjet methods, the printing substrate is preferably a porous substrate, such as paper or fabric.

By ejecting ink droplets of the inkjet ink of the present invention onto the surface of such a printing substrate with an inkjet printer, a printed material with, for example, various codes, such as characters, bar codes, and data matrix codes, printed thereon can be obtained.

### Examples

The present invention is described in detail below with reference to Examples and Comparative Examples; however, the present invention is not limited to these Examples.

In the Examples, the following commercially available reagents were used. The viscosity of each of the following reagents is the numerical value at 20°C.
Color Material Pigment
   Carbon black: REGAL660R (C.I. Pigment Black 7) produced by Cabot Corporation
Dispersant
   Solsperse 24000 produced by Lubrizol Corporation
Solvent
   Isopropyl myristate (IPM): flash point of 130°C and viscosity of 5.4 mPa·s
   Isopropyl palmitate (IPP): flash point of 183°C and viscosity of 7.4 mPa·s
Plasticizer
   Dibutyl sebacate (DBS): flash point of 190°C and viscosity of 9.1 mPa·s
   Diethylhexyl adipate (DOA): flash point of 205°C and viscosity of 13.5 mPa·s
   Dibutyl adipate (DBA): flash point of 166°C and viscosity of 6.0 mPa·s
   Methyl laurate: flash point of 136°C and viscosity of 2.6 mPa·s Dimethyl adipate (DMA): flash point of 122°C and viscosity of 3.3 mPa·s
   Dioctyl sebacate (DOS): flash point of 222°C and viscosity of 20.9 mPa·s
Mineral Oil
   Liquid paraffin 40S produced by Sanko Chemical Industry Co., Ltd.

### Example 1

As shown in Table 1, isopropyl myristate (IPM; 36.5 parts by mass), isopropyl palmitate (IPP; 20.0 parts by mass), dibutyl sebacate (DBS; 25.0 parts by mass), and diethylhexyl adipate (DOA; 5.0 parts by mass) were mixed with Solsperse 24000 (4.5 parts by mass) as a dispersant and carbon black (9.0 parts by mass) as a color material pigment, followed by a dispersion treatment in a horizontal sand mill (DYNO-MILL MULTI LAB produced by Willy A. Bachofen) at a peripheral speed of 12 m/sec for 2 hours. Filtration was performed using a filter having openings of 1 µm to prepare the inkjet ink of Example 1.

### Examples 2 to 6 and Comparative Examples 1 to 10

The inkjet inks of Examples 2 to 6 and Comparative Examples 1 to 10 were prepared in the same manner as in Example 1, except that the types and amounts of solvent, plasticizer, and mineral oil were adjusted as shown in Tables 1 and 2.

### Evaluation 1: Viscosity

The viscosity of each of the inkjet inks of Examples 1 to 6 and Comparative Examples 1 to 10 was measured with a rotating disk viscometer (RE-80L produced by Toki Sangyo Co., Ltd.) at a measurement temperature of 20°C. For high-speed ejection from inkjet nozzles, a lower viscosity is preferable, and evaluation was carried out as follows.
○: 12.5 mPa·s or less
Δ: more than 12.5 mPa·s and 15.0 mPa·s or less
×: more than 15.0 mPa·s

### Evaluation 2: Freezing Point

The freezing point of each of the inkjet inks of Examples 1 to 6 and Comparative Examples 1 to 10 was measured in accordance with JISK 0065:1992 (test method for freezing point of chemical products). Assuming use in winter, a lower freezing point is preferable, and evaluation was carried out as follows.
○: -3°C or lower
×: higher than -3°C

### Evaluation 3: Swelling

A rubber part (O-ring S11.2 type 4 D) was immersed in each of the inkjet inks of Examples 1 to 6 and Comparative Examples 1 to 10 at 45°C for 1 month, and the weight change before and after immersion was measured, and evaluation was carried out as follows.
○: Weight change was 10 mass% or less.
×: Weight change was more than 10 mass%.

### Evaluation 4: Mineral Oil

Each of the inkjet inks of Examples 1 to 6 and Comparative Examples 1 to 10 was evaluated with respect to the French government's regulations for mineral oils as follows.
○: No mineral oil was used.
×: Mineral oil was used.

### Evaluation 5: Continuous Printing Stability

Using each of the inkjet inks of Examples 1 to 6 and Comparative Examples 1 to 10, printing was performed at high speed (3.5 KHz) with a JET-HQ510 (piezo drop-on-demand inkjet printer) produced by Kishu Giken Kogyo Co., Ltd., at 40°C for 10 minutes, and evaluation was carried out as follows.
○: The percentage of nozzles that failed to eject the ink was less than 10%.
×: The percentage of nozzles that failed to eject the ink was 10% or more.

Tables 1 and 2 show the results of Evaluations 1 to 5.

**Table 1**

| Material | Ex. 1 | Ex. 2 | Ex. 3 | Ex. 4 | Ex. 5 | Ex. 6 |
|---|---|---|---|---|---|---|
| Carbon black | 9 | 9 | 9 | 9 | 9 | 9 |
| Solsperse 24000 | 4.5 | 4.5 | 4.5 | 4.5 | 4.5 | 4.5 |
| Isopropyl myristate | 36.5 | 41.5 | 36.5 | 41.5 | 41.5 | 45 |
| Isopropyl palmitate | 20 | 20 | 25 | 20 | 20 | 11.5 |
| Diethylhexyl adipate | 5 | 5 | 5 | | | |
| Dibutyl adipate | | | | 5 | | |
| Methyl laurate | | | | | 5 | 15 |
| Dibutyl sebacate | 25 | 20 | 20 | 20 | 20 | 15 |
| | 100 | 100 | 100 | 100 | 100 | 100 |
| Evaluation | | | | | | |
| Viscosity | 12.1 | 11.7 | 12 | 11.8 | 11.2 | 10.7 |
| | ○ | ○ | ○ | ○ | ○ | ○ |
| Freezing point | ○ | ○ | ○ | ○ | ○ | ○ |
| Swelling | ○ | ○ | ○ | ○ | ○ | ○ |
| Mineral oil | ○ | ○ | ○ | ○ | ○ | ○ |
| Continuous printing stability | ○ | ○ | ○ | ○ | ○ | ○ |

**Table 2**

| Material | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 |
|---|---|---|---|---|---|---|---|---|---|---|
| Carbon black | 9 | 9 | 9 | 9 | 9 | 9 | 9 | 9 | 9 | 9 |
| Solsperse 24000 | 4.5 | 4.5 | 4.5 | 4.5 | 4.5 | 4.5 | 4.5 | 4.5 | 4.5 | 4.5 |
| Isopropyl myristate | 36.5 | 31.5 | 40 | 50 | 31.5 | 31.5 | 41.5 | 41.5 | | 41.5 |
| Isopropyl palmitate | | | | | 30 | 20 | 20 | 22 | | 23 |
| Dimethyl adipate | | | | | | | 5 | | | |
| Diethylhexyl adipate | | | | | | 10 | | 5 | | 5 |
| Dibutyl sebacate | 25 | 25 | 25 | 25 | 25 | 25 | 20 | 18 | 25 | 17 |
| Dioctyl sebacate | 25 | 30 | 21.5 | 11.5 | | | | | | |
| Liquid paraffin 40S | | | | | | | | | 61.5 | |
| | 100 | 100 | 100 | 100 | 100 | 100 | 100 | 100 | 100 | 100 |
| Evaluation | | | | | | | | | | |
| Viscosity | 15.4 | 16.7 | 13.5 | 11.3 | 11.8 | 12.6 | 11.4 | 11.4 | 11.5 | 11.6 |
| | × | × | Δ | ○ | ○ | Δ | ○ | ○ | ○ | ○ |
| Freezing point | × | ○ | × | × | × | ○ | ○ | × | ○ | × |
| Swelling | × | × | × | × | ○ | × | ○ | ○ | ○ | ○ |
| Mineral oil | ○ | ○ | ○ | ○ | ○ | ○ | ○ | ○ | × | ○ |
| Continuous printing stability | ○ | ○ | ○ | ○ | ○ | ○ | × | ○ | ○ | ○ |

## Claims

1. An inkjet ink comprising:
a saturated fatty acid monoester having a flash point of 125 to 170°C and a viscosity at 20°C of 4.0 to 10.0 mPa·s (1);
a saturated fatty acid monoester having a flash point of 170 to 200°C (2); and
a plasticizer,
the plasticizer comprising two or more saturated fatty acid diesters each having a flash point of 125 to 220°C, or a saturated fatty acid diester having a flash point of 125 to 220°C and a saturated fatty acid monoester having a flash point of 125 to 170°C and a viscosity at 20°C of 0.1 to 4.0 mPa·s (3), and
the total content of the saturated fatty acid monoester (1) and the saturated fatty acid monoester (2) being 53.0 to 63.0 mass% based on the total amount of the ink taken as 100 mass%.

2. The inkjet ink according to claim 1, wherein the content ratio of the saturated fatty acid monoester (2) to the saturated fatty acid monoester (1) (saturated fatty acid monoester (2)/saturated fatty acid monoester (1)) is 0.20 to 0.80.

3. The inkjet ink according to claim 1, wherein the content of the plasticizer is 15.0 to 35.0 mass% in total based on the total amount of the ink taken as 100 mass%.

4. The inkjet ink according to claim 1, further comprising a pigment and/or a dye.

5. The inkjet ink according to claim 1, further comprising a pigment derivative and/or a pigment dispersant.

6. The inkjet ink according to claim 1, which is free of mineral oils.

7. The inkjet ink according to claim 1, which is an oil-based inkjet ink.

8. The inkjet ink according to claim 1, which is a piezo inkjet ink.

9. An inkjet ink container containing the inkjet ink of any one of claims 1 to 8.

10. A printed material comprising a printing substrate that has been printed on with the inkjet ink of any one of claims 1 to 8.

11. The printed material according to claim 10, wherein the printing substrate is a porous material.
